# EUROPÄISCHE PATENTSCHRIFT

(11) **EP 1 693 865 B1**
(45) Veröffentlichungstag und Bekanntmachung des Hinweises auf die Patenterteilung: **08.04.2009**
(21) Anmeldenummer: 06110048.3
(22) Anmeldetag: 16.02.2006
(51) Int. Cl.: H01G 4/32, H01G 4/38

(54) **Hochspannungskondensator**
High voltage capacitor
Condensateur à haute tension

(30) Priorität: 18.02.2005 DE 202005003185 U
(43) Veröffentlichungstag der Anmeldung: 23.08.2006
(73) Patentinhaber: SIEMENS AKTIENGESELLSCHAFT, 80333 München (DE)
(72) Erfinder: Koch, Norbert, 51147 Köln (DE)

(56) Entgegenhaltungen:
- EP-A- 0 546 890
- EP-A- 1 341 195
- GB-A- 273 240
- GB-A- 924 261
- GB-A- 1 086 348
- US-B1- 6 724 610

## Beschreibung

Die Erfindung betrifft einen Hochspannungskondensator mit Einzelkondensatoren.

Ein solcher Kondensator ist aus dem landläufigen Stand der Technik bereits bekannt.

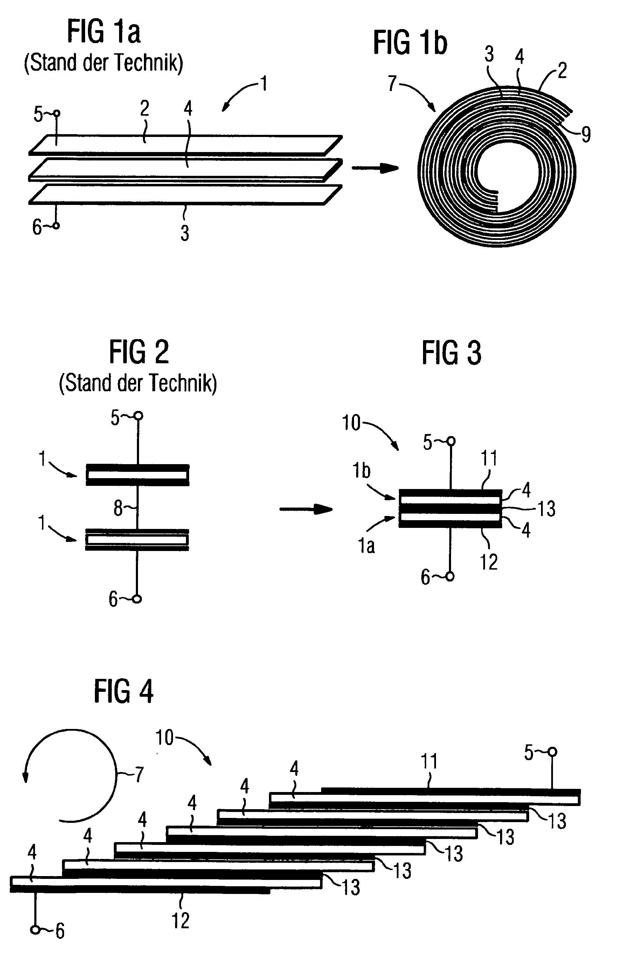

In Figur 1a ist in schematischer Darstellung die Ausgestaltung eines Einzelkondensators 1 eines Hochspannungskondensators gemäß dem Stand der Technik gezeigt. Der Einzelkondensator 1 besteht aus zwei Metallfolien 2 und 3, zwischen denen eine Isolierstofffolie 4 angeordnet ist, welche aus einem isolierenden Material besteht und somit als Dielektrikum zwischen den Metallfolien 2 und 3 wirkt. Dabei sind die Metallfolien 2 und 3 jeweils mit einer Anschlussklemme 5 beziehungsweise 6 versehen. Die Kapazität des Einzelkondensators 1 ist proportional zur Fläche seiner Elektroden, d. h. Metallfolien 2 und 3, und umgekehrt proportional zu deren Abstand. Um möglichst große Kapazitäten bereitzustellen, ist man daher bestrebt, die Metallfolien 2 und 3 möglichst großflächig auszubilden und aus Platzgründen zu einer in Figur 1b gezeigten Wicklung 7 zu wickeln.

In der Energieverteilung sind auf der Hochspannungsebene Spannungen üblich, die zur Zerstörung eines Einzelkondensators gemäß der Figur 1a oder 1b führen würden. Hochspannungskondensatoren sind daher aus mehreren, beispielsweise hundert Einzelkondensatoren, zusammengesetzt, die miteinander in Reihe geschaltet sind. Zum kompakten Aufbau der Reihenschaltung wird die in Figur 1 gezeigte Wicklung 7 durch Druckanwendung abgeflacht. Die abgeflachten Wicklungen 7 sind anschließend stapelbar, so dass eine schematisch in Figur 2 gezeigte Reihenschaltung durch Aufeinanderlegen und Kontaktieren der abgeflachten Einzelkondensatoren 7 herstellbar ist. Durch das Aufeinanderlegen der Einzelkondensatoren 1 erfolgt das Kontaktieren über einen schematisch in Figur 2 dargestellten Kontaktssteg 8, der im Vergleich zur Fläche der Metallfolien 5 und 6 eine kleine Querschnittsfläche aufweist. Ein Stapel aus Einzelkondensatoren wird auch als Aktivteil des Hochspannungskondensators bezeichnet. Das Aktivteil ist beispielsweise in einem Keramikgehäuse angeordnet, das mit einem geeigneten Isolierstoff, wie beispielsweise Öl oder Harz, gefüllt ist.

Der vorbekannte Hochspannungskondensator weist jedoch verschiedene Nachteile auf. So kommt es aufgrund der großen Elektrodenflächen der Einzelkondensatoren zu langen Wegen, welche die Ströme zum Laden und Entladen der Einzelkondensatoren zurücklegen müssen. Damit sind jedoch hohe ohmsche Wärmeverluste verknüpft. Darüber hinaus benötigen die Ströme aufgrund der langen Wege eine gewisse Lade- und Entladezeit, wodurch das Ansprechen des Kondensators auf Ladestromschwankungen verlangsamt wird. Ferner herrscht im Kontaktbereich der Einzelkondensatoren, also im Kontaktsteg 8, im Vergleich zur derjenigen der Elektroden der Kondensatoren eine hohe Stromdichte, so dass auch hierdurch entweder hohe Verlustwärmen entstehen oder aber aufwändige Zusatzmaßnahmen zu deren Vermeidung ergriffen werden müssen. Schließlich ist zwischen einander benachbarten Einzelkondensatoren 1 eine weitere Isolierstofffolie 9 vorzusehen, um die Metallfolien benachbarter Einzelkondensatoren beim Wickeln nicht kurzzuschließen.

Die GB 27 32 40 A und die GB 1,086,348 betreffen jeweils einen Kondensator mit Untereinheiten, die ein doppelt beschichtetes wickelbares Dielektrikum aufweisen. Die Untereinheiten werden vor dem Wickeln in Schichten aufeinander gelegt, wobei diese eine Reihenschaltung ausbilden. Nach dem Wickeln kommt es zum Kontakt zwischen der untersten und der obersten leitenden Schicht, so dass die Reihenschaltung der Untereinheiten aufgehoben ist.

Aufgabe der Erfindung ist es, einen Hochspannungskondensator der eingangs genannten Art bereitzustellen, der kostengünstig und ferner einfach herstellbar ist.

Die Erfindung löst diese Aufgabe dadurch, dass die Einzelkondensatoren in einer gemeinsamen Wicklung angeordnet sind, wobei in der Wicklung eine Reihenschaltung ausgebildet ist.

Dadurch, dass die Reihenschaltung in einer gemeinsamen Wicklung ausgebildet ist, ist die Herstellung des erfindungsgemäßen Hochspannungskondensators vereinfacht, da lediglich ein kostenintensiver Wickelprozess erforderlich ist. Der erfindungsgemäße Hochspannungskondensator kann nahezu vollständig flächig, also schicht- oder stapelweise, hergestellt werden und wird erst am Ende seines Herstellungsverfahrens zu einem kompakten Bauteil gewickelt.

Vorteilhafterweise weisen die Einzelkondensatoren aus Metallfolien bestehende Elektroden auf, zwischen denen eine elektrisch nicht leitende Isolierstofffolie als Dielektrikum angeordnet ist. Die gemäß dieser Weiterentwicklung der Erfindung verwendeten Materialen sind flexibel und gleichzeitig kostengünstig, so dass die Kosten des erfindungsgemäßen Hochspannungskondensators noch weiter herabgesetzt sind.

Gemäß einer bevorzugten Weiterentwicklung der Erfindung bilden Teile der Metallfolien jeweils sowohl die Elektrode eines ersten Einzelkondensators als auch die Elektrode eines zweiten Einzelkondensators aus. Gemäß dieser Weiterentwicklung sind die Kondensatorplatten, die in der Reihenschaltung unmittelbar miteinander verbunden sind, entweder flächig miteinander kontaktiert oder einstückig ausgebildet, so dass ein Stromfluss über eine im Vergleich zur Gesamtfläche geringe Anschlussfläche und damit hohe Verlustwärmen vermieden sind.

Darüber hinaus sind die Zusatzisolierungen zwischen den Elektroden einander unmittelbar benachbarter Einzelkondensatoren überflüssig geworden. Der so weitergebildete erfindungsgemäße Hochspannungskondensator ist daher verlustarm und weist ein verbessertes Trägheitsverhalten auf.

Als Metallfolie eignet sich beispielsweise eine Kupferfolie oder eine Aluminiumfolie. Die Isolierstofffolien sind aus Stoffen mit hohem Isoliervermögen herstellbar.

Die Metallfolien weisen vorteilhafterweise eine Dicke von wenigen Millimetern auf. Die Dicke der Isolierstofffolie ist von der im Betrieb anliegenden Spannung, der Anzahl der Einzelkondensatoren so wie dem gewählten Material abhängig und beträgt beispielsweise zwischen 5 und 50 µm.

Weitere zweckmäßige Ausgestaltungen und Vorteile sind Gegenstand der nachfolgenden Beschreibung von Ausführungsbeispielen der Erfindung unter Bezug auf die Figuren der Zeichnung, wobei gleiche Bezugszeichen auf gleich wirkende Bauteile verweisen und wobei
- Figur 1a: einen flächigen Einzelkondensator gemäß dem Stand der Technik,
- Figur 1b: eine Wicklung des Einzelkondensators gemäß Figur 1a,
- Figur 2: eine Reihenschaltung der Einzelkondensatoren von Figur 1 gemäß dem Stand der Technik in Schaltbilddarstellung,
- Figur 3: eine Reihenschaltung eines Ausführungsbeispiels des erfindungsgemäßen Hochspannungskondensators in Schaltbilddarstellung und
- Figur 4: ein weiteres Ausführungsbeispiel des erfindungsgemäßen Hochspannungskondensators in einer schematischen Darstellung vor seiner Wicklung zeigen.

Die Figuren 1a, 1b und 2 wurden bereits eingangs bei der Würdigung des Standes der Technik beschrieben.

Figur 3 zeigt zur Verdeutlichung der erfindungsgemäßen Lehre eine Figur 2 entsprechende Schaltbilddarstellung eines erfindungsgemäßen Hochspannungskondensators 10. Der dort gezeigte Hochspannungskondensator 10 weist eine erste Außenmetallfolie 11 sowie eine zweite Außenmetallfolie 12 auf, die jeweils mit einer Anschlussklemme 5 beziehungsweise 6 verbunden sind. Zwischen den Außenmetallfolien 11 und 12 ist eine Zwischenmetallfolie 13 erkennbar, die von den Außenmetallfolien 11 und 12 jeweils durch eine Isolierstofffolie 4 beabstandet ist. Mit anderen Worten sind die über den Kontaktsteg 8 miteinander verbundenen Metallfolien 2 und 3 gemäß dem in Figur 2 gezeigten Stand der Technik durch die Zwischenmetallfolie 13 ersetzt, so dass ein Stromfluss über den schmalen Kontaktsteg 8 erfindungsgemäß vermieden ist. Die Zwischenmetallfolie 12 bildet somit sowohl eine Elektrode des Einzelkondensators 1a als auch eine Elektrode des Einzelkondensators 1b aus.

Im Hochspannungsbereich ist der Einsatz zweier Einzelkondensatoren 1a und 1b im Hinblick auf die hohen anliegenden Betriebsspannungen nicht ausreichend.

Figur 4 zeigt ein bevorzugtes Ausführungsbeispiel des erfindungsgemäßen Hochspannungskondensators 10 vor seiner Wicklung. Es ist erkennbar, dass zwischen den beiden Außenmetallfolien 11 und 12 mehrere Zwischenmetallfolien 13 vorgesehen sind, die untereinander durch Isolierstofffolien 4 beabstandet sind. Auf diese Weise wird die Anzahl der Einzelkondensatoren 1 auf ein Maß erhöht, das den aus der Betriebsspannung resultierenden Anforderungen gerecht wird. Der in Figur 3 dargestellte aus Schichten aufgebaute Hochspannungskondensator 10 wird anschließend zu einer mit dem Pfeil angedeuteten Wicklung 7 gewickelt, in der alle Einzelkondensatoren 1 gemeinsam aufgenommen sind.

Die gemeinsame Wicklung 7 kann beliebig weiterverarbeitet werden. So ist es beispielsweise möglich, die Wicklung 7 durch Druck abzuflachen und als solche oder aber als Rundkörper in einem Isolierstoffgehäuse unterzubringen. Als Isolierstoffgehäuse eignet sich beispielsweise ein Keramikgehäuse, das mit einem Isolierstoff, beispielsweise Öl oder Harz, befüllt ist. Die Wicklung 7 der Reihenschaltung ist somit in dem Isolierstoff angeordnet, wobei die Klemmen 5 und 6 zum Anschluss des Hochspannungskondensators 10 aus dem Isolierstoffgehäuse nach außen geführt sind.

## Patentansprüche

1. Hochspannungskondensator (10) mit Einzelkondensatoren (1),
**dadurch gekennzeichnet, dass**
die Einzelkondensatoren (1) in einer gemeinsamen Wicklung (7) angeordnet sind, wobei in der Wicklung eine Reihenschaltung ausgebildet ist.

2. Hochspannungskondensator (10) nach Anspruch 1,
**dadurch gekennzeichnet, dass**
die Einzelkondensatoren (1) aus Metallfolien (11,12,13) bestehende Elektroden aufweisen, zwischen denen eine elektrisch nicht leitende Isolierstofffolie (4) als Dielektrikum angeordnet ist.

3. Hochspannungskondensator (10) nach Anspruch 1 oder 2,
**dadurch gekennzeichnet, dass**
Teile der Metallfolien (13) jeweils sowohl die Elektrode eines ersten Einzelkondensators (1a) als auch die Elektrode eines zweiten Einzelkondensators (1b) ausbilden.

## Claims

1. High-voltage capacitor (10) comprising individual capacitors (1),
**characterized in that**
the individual capacitors (1) are arranged in a common winding (7), a series circuit being formed in the winding.

2. High-voltage capacitor (10) according to Claim 1,
**characterized in that**
the individual capacitors (1) have electrodes which comprise metal films (11, 12, 13) and between which an electrically non-conductive insulating material film (4) is arranged as a dielectric.

3. High-voltage capacitor (10) according to Claim 1 or 2,
**characterized in that**
parts of the metal films (13) in each case form both the electrode of a first individual capacitor (1a) and the electrode of a second individual capacitor (1b).

## Revendications

1. Condensateur ( 10 ) à haute tension, comprenant des condensateurs ( 1 ) individuels, **caractérisé en ce que** les condensateurs ( 1 ) individuels sont disposés dans un enroulement ( 7 ) commun, un circuit série étant formé dans l'enroulement.

2. Condensateur ( 10 ) à haute tension suivant la revendication 1, **caractérisé en ce que** les condensateurs ( 1 ) individuels ont des électrodes en rubans ( 11, 12, 13 ) métalliques, électrodes entre lesquelles est disposé comme diélectrique un ruban ( 4 ) en une substance isolante qui ne conduit pas l'électricité.

3. Condensateur ( 10 ) à haute tension suivant la revendication 1 ou 2, **caractérisé en ce que** des parties des rubans ( 13 ) métalliques forment respectivement tant l'électrode d'un premier condensateur ( 1a ) individuel qu'également l'électrode d'un deuxième condensateur ( 1b ) individuel.
